# EUROPEAN PATENT SPECIFICATION

(11) **EP 0 765 189 B1**
(45) Date of publication and mention of the grant of the patent: **12.04.2000**
(21) Application number: 95910256.7
(22) Date of filing: 14.02.1995
(51) Int. Cl.: B01D 53/94, B01J 37/02, B01J 23/56

(54) **LAYERED CATALYST COMPOSITE**
ZUSAMMENGESETZTER KATALYSATOR MIT SCHICHTSTRUKTUR
CATALYSEUR COMPOSITE EN COUCHES

(30) Priority: 17.06.1994 US 261624
(43) Date of publication of application: 02.04.1997
(73) Proprietor: ENGELHARD CORPORATION, Iselin, New Jersey 08830-0770 (US)
(72) Inventor: CHEN, Shau-Lin, Piscataway, NJ 08854 (US); RABINOWITZ, Harold, N., Upper Montclair, NJ 07043 (US); TAUSTER, Samuel, J., Englishtown, NJ 07726 (US)
(74) Representative: Fisher, Adrian John
(86) International application number: US9501849
(87) International publication number: WO9535152

(56) References cited:
- EP-A- 0 171 151
- EP-A- 0 313 434
- EP-A- 0 335 847
- EP-A- 0 393 612
- EP-A- 0 428 752
- EP-A- 0 441 173
- EP-A- 0 443 765
- EP-A- 0 507 590
- WO-A-95/00235

## Description

### Field Of The Invention

The present invention relates to a layered catalyst composition useful for the treatment of gases to reduce contaminants contained therein. More specifically, the present invention is concerned with improved catalysts of the type generally referred to as "three-way conversion" or "TWC" catalysts. These TWC catalysts are polyfunctional in that they have the capability of substantially simultaneously catalyzing the oxidation of hydrocarbons and carbon monoxide and the reduction of nitrogen oxides.

### Background of the Invention

Three-way conversion catalysts have utility in a number of fields including the treatment of exhaust from internal combustion engines, such as automobile and other gasoline-fueled engines. Emissions standards for unburned hydrocarbons, carbon monoxide and nitrogen oxides contaminants have been set by various governments and must be met, for example, by new automobiles. In order to meet such standards, catalytic converters containing a TWC catalyst are located in the exhaust gas line of internal combustion engines. The catalysts promote the oxidation by oxygen in the exhaust gas of the unburned hydrocarbons and carbon monoxide and the reduction of nitrogen oxides to nitrogen.

Known TWC catalysts which exhibit good activity and long life comprise one or more platinum group metals (e.g., platinum or palladium, rhodium, ruthenium and iridium) located upon a high surface area, refractory oxide support, e.g., a high surface area alumina coating. The support is carried on a suitable carrier or substrate such as a monolithic carrier comprising a refractory ceramic or metal honeycomb structure, or refractory particles such as spheres or short, extruded segments of a suitable refractory material.

US Patent No. 4,134,860 relates to the manufacture of catalyst structures. The catalyst composition can contain platinum group metals, base metals, rare earth metals and refractory, such as alumina support. The composition can be deposited on a relatively inert carrier such as a honeycomb.

High surface area alumina support materials, also referred to as "gamma alumina" or "activated alumina", typically exhibit a BET surface area in excess of 60 square meters per grain ("m²/g"), often up to about 200 m²/g or more. Such activated alumina is usually a mixture of the gamma and delta phases of alumina, but may also contain substantial amounts of eta, kappa and theta alumina phases. It is known to utilize refractory metal oxides other than activated alumina as a support for at least some of the catalytic components in a given catalyst. For example, bulk ceria, zirconia, alpha alumina and other materials are known for such use. Although many of these materials suffer from the disadvantage of having a considerably lower BET surface area than activated alumina, that disadvantage tends to be offset by a greater durability of the resulting catalyst.

In a moving vehicle, exhaust gas temperatures can reach 1000°C, and such elevated temperatures cause the activated alumina (or other) support material to undergo thermal degradation caused by a phase transition with accompanying volume shrinkage, especially in the presence of steam, whereby the catalytic metal becomes occluded in the shrunken support medium with a loss of exposed catalyst surface area and a corresponding decrease in catalytic activity. It is a known expedient in the art to stabilize alumina supports against such thermal degradation by the use of materials such as zirconia, titania, alkaline earth metal oxides such as baria, calcia or strontia or rare earth metal oxides, such as ceria, lanthana and mixtures of two or more rare earth metal oxides. For example, see C.D. Keith et al U.S. Patent 4,171,288.

Bulk cerium oxide (ceria) is disclosed to provide an excellent refractory oxide support for platinum group metals other than rhodium, and enables the attainment of highly dispersed, small crystallites of platinum on the ceria particles, and that the bulk ceria may be stabilized by impregnation with a solution of an aluminum compound, followed by calcination. U.S. Patent 4,714,694 of C.Z. Wan et al, discloses aluminum-stabilized bulk ceria, optionally combined with an activated alumina, to serve as a refractory oxide support for platinum group metal components impregnated thereon. The use of bulk ceria as a catalyst support for platinum group metal catalysts other than rhodium, is also disclosed in U.S. Patent 4,727,052 of C.Z. Wan et al and in U.S. Patent 4,708,946 of Ohata et al.

US Patent No. 4,808,564 discloses a catalyst for the purification of exhaust gases having improved durability which comprises a support substrate, a catalyst carrier layer formed on the support substrate and catalyst ingredients carried on the catalyst carrier layer. The catalyst carrier layer comprises oxides of lanthanum and cerium in which the molar fraction of lanthanum atoms to total rare earth atoms is 0.05 to 0.20 and the ratio of the number of the total rare earth atoms to the number of aluminum atoms is 0.05 to 0.25.

US Patent No. 4,438,219 discloses an alumina supported catalyst for use on a substrate. The catalyst is stable at high temperatures. The stabilizing material is disclosed to be one of several compounds including those derived from barium, silicon, rare earth metals, alkali and alkaline earth metals, boron, thorium, hafnium and zirconium. Of the stabilizing materials barium oxide, silicon dioxide and rare earth oxides which include lanthanum, cerium, praseodymium, neodymium, and others are indicated to be preferred. It is disclosed that contacting them with a calcined alumina film permits the calcined alumina film to retain a high surface area at higher temperatures.

US Patent Nos. 4,476,246, 4,591,578 and 4,591,580 disclose three-way catalyst compositions comprising alumina, ceria, an alkali metal oxide promoter and noble metals. U.S. Patents 3,993,572 and 4,157,316 represent attempts to improve the catalyst efficiency of Pt/Rh based TWC systems by incorporating a variety of metal oxides, e.g., rare earth metal oxides such as ceria and base metal oxides such as nickel oxides. US Patent No. 4,591,518 discloses a catalyst comprising an alumina support with components deposited thereon consisting essentially of a lanthana component, ceria, an alkali metal oxide and a platinum group metal. U.S. Patent No. 4,591,580 discloses an alumina supported platinum group metal catalyst. The support is sequentially modified to include support stabilization by lanthana or lanthana rich rare earth oxides, double promotion by ceria and alkali metal oxides and optionally nickel oxide. Palladium containing catalyst compositions e.g. U.S. Pat. No. 4,624,940 have been found useful for high temperature applications. The combination of lanthanum and barium is found to provide a superior hydrothermal stabilization of alumina which supports the catalytic component, palladium.

U.S. Patent 4,294,726 discloses a TWC catalyst composition containing platinum and rhodium obtained by impregnating a gamma alumina carrier material with an aqueous solution of cerium, zirconium and iron salts or mixing the alumina with oxides of, respectively, cerium, zirconium and iron, and then calcining the material at 500 to 700°C in air after which the material is impregnated with an aqueous solution of a salt of platinum and a salt of rhodium dried and subsequently treated in a hydrogen-containing gas at a temperature of 250-650°C. The alumina may be thermally stabilized with calcium, strontium, magnesium or barium compounds. The ceria-zirconia-iron oxide treatment is followed by impregnating the treated carrier material with aqueous salts of platinum and rhodium and then calcining the impregnated material.

US Patent No. 4,780,447 discloses a catalyst which is capable of controlling HC, CO and NOₓ as well as H₂S in emissions from the tailpipe of catalytic converter equipped automobiles. The use of the oxides of nickel and/or iron is disclosed as an H₂S gettering compound.

U.S Pat. No. 4,965,243 discloses a method to improve thermal stability of a TWC catalyst containing precious metals by incorporating a barium compound and a zirconium compound together with ceria and alumina. This is disclosed to form a catalytic moiety to enhance stability of the alumina washcoat upon exposure to high temperature.

J01210032 (and AU-615721) discloses a catalytic composition comprising palladium, rhodium, active alumina, a cerium compound, a strontium compound and a zirconium compound. These patents suggest the utility of alkaline earth metals in combination with ceria, and zirconia to form a thermally stable alumina supported palladium containing washcoat.

U.S. Pat. Nos. 4,624,940 and 5,057,483 refer to ceria-zirconia containing particles. It is found that ceria can be dispersed homogeneously throughout the zirconia matrix up to 30 weight percent of the total weight of the ceria-zirconia composite to form a solid solution. A co-formed (e.g. co-precipitated) ceria-zirconia particulate composite can enhance the ceria utility in particles containing ceria-zirconia mixture. The ceria provides the zirconia stabilization and also acts as an oxygen storage component. The '483 patent discloses that neodymium and/or yttrium can be added to the ceria-zirconia composite to modify the resultant oxide properties as desired.

U.S. Patent 4,504,598 discloses a process for producing a high temperature resistant TWC catalyst. The process includes forming an aqueous slurry of particles of gamma or other activated alumina and impregnating the alumina with soluble salts of selected metals including cerium, zirconium, at least one of iron and nickel and at least one of platinum, palladium and rhodium and, optionally, at least one of neodymium, lanthanum, and praseodymium. The impregnated alumina is calcined at 600°C and then dispersed in water to prepare a slurry which is coated on a honeycomb carrier and dried to obtain a finished catalyst.

US Patent Nos. 3,787,560, 3,676,370, 3,552,913, 3,545,917, 3,524,721 and 3,899,444 all disclose the use of neodymium oxide for use in reducing nitric oxide in exhaust gases of internal combustion engines. US Patent No. 3,899,444 in particular discloses that rare earth metals of the lanthanide series are useful with alumina to form an activated stabilized catalyst support when calcined at elevated temperatures. Such rare earth metals are disclosed to include lanthanum, cerium, praseodymium, neodymium and others.

TWC catalyst systems comprising a carrier and two or more layers of refractory oxide are disclosed.

For example, Japanese Patent Publication No. 145381/1975 discloses a catalyst-supported structure for purifying exhaust gases comprising a thermally insulating ceramic carrier and at least two layers of catalyst containing alumina or zirconia, the catalysts in the catalyst containing alumina or zirconia layers being different from each other.

Japanese Patent Publication No. 105240/1982 discloses a catalyst for purifying exhaust gases containing at least two kinds of platinum-group metals. The catalyst comprises at least two carrier layers of a refractory metal oxide each containing a different platinum-group metal. There is a layer of a refractory metal oxide free from the platinum-group metal between the carrier layers and/or on the outside of these carrier layers.

Japanese Patent Publication No. 52530/1984 discloses a catalyst having a first porous carrier layer composed of an inorganic substrate and a heat-resistant noble metal-type catalyst deposited on the surface of the substrate and a second heat-resistant non-porous granular carrier layer having deposited thereon a noble metal-type catalyst, said second carrier layer being formed on the surface of the first carrier layer and having resistance to the catalyst poison.

Japanese Patent Publication No. 127649/1984 discloses a catalyst for purifying exhaust gases, comprising an inorganic carrier substrate such as cordierite, an alumina layer formed on the surface of the substrate and having deposited thereon at least one rare earth metal such as lanthanum and cerium and at least one of platinum and palladium, and a second layer formed on the aforesaid first alumina-based layer and having deposited thereon a base metal such as iron or nickel, and at least one rare earth metal such as lanthanum, and rhodium.

Japanese Patent Publication No. 19036/1985 discloses a catalyst for purifying exhaust gases having an enhanced ability to remove carbon monoxide at low temperatures, said catalyst comprising a substrate composed, for example, of cordierite and two layers of active alumina laminated to the surface of the substrate, the lower alumina layer containing platinum or vanadium deposited thereon, and the upper alumina layer containing rhodium and platinum, or rhodium and palladium, deposited thereon.

Japanese Patent Publication No. 31828/1985 discloses a catalyst for purifying exhaust gases, comprising a honeycomb carrier and a noble metal having a catalytic action for purifying exhaust gases, the carrier being covered with an inside and an outside alumina layer, the inside layer having more noble metal adsorbed thereon than the outside layer; and a process for production of this catalyst.

Japanese Patent Publication No. 232253/1985 discloses a monolithic catalyst for purifying exhaust gases being in the shape of a pillar and comprising a number of cells disposed from an exhaust gas inlet side toward an exhaust gas outlet side. An alumina layer is formed on the inner wall surface of each of the cells, and catalyst ingredients are deposited on the alumina layer. The alumina layer consists of a first alumina layer on the inside and a second alumina layer on the surface side, the first alumina layer having palladium and neodymium deposited thereon, and the second alumina layer having platinum and rhodium deposited thereon.

Japanese Kokai 71538/87 discloses a catalyst layer supported on a catalyst carrier and containing one catalyst component selected from the group consisting of platinum, palladium and rhodium. An alumina coat layer is provided on the catalyst layer. The coat layer contains one oxide selected from the group consisting of cerium oxide, nickel oxide, molybdenum oxide, iron oxide and at least one oxide of lanthanum and neodymium (1-10% by wt.).

US Patent Nos. 3,956,188 and 4,021,185 disclose a catalyst composition having (a) a catalytically active, calcined composite of alumina, a rare earth metal oxide and a metal oxide selected from the group consisting of an oxide of chromium, tungsten, a group IVB metal and mixtures thereof and (b) a catalytically effective amount of a platinum group metal added thereto after calcination of said composite. The rare earth metals include cerium, lanthanum and neodymium.

US Patent No. 4,806,519, discloses a two layer catalyst structure having alumina, ceria and platinum on the inner layer and aluminum, zirconium and rhodium on the outer layer.

JP-88-240947 discloses a catalyst composite which includes an alumina layer containing ceria, ceria-doped alumina and at least one component selected from the group of platinum, palladium and rhodium. There is a second layer containing lanthanum-doped alumina, praseodymium- stabilized zirconium, and lanthanum oxide and at least one component selected from the group of palladium and rhodium. The two layers are placed on a catalyst carrier separately to form a catalyst for exhaust gas purification.

Japanese Patent J-63-205141-A discloses a layered automotive catalyst in which the bottom layer comprises platinum or platinum and rhodium dispersed on an alumina support containing rare earth oxides, and a top coat which comprises palladium and rhodium dispersed on a support comprising alumina, zirconia and rare earth oxides.

Japanese Patent J-63-077544-A discloses a layered automotive catalyst having a first layer comprising palladium dispersed on a support comprising alumina, lanthana and other rare earth oxides and a second coat comprising rhodium dispersed on a support comprising alumina, zirconia, lanthana and rare earth oxides.

Japanese Patent J-63-007895-A discloses an exhaust gas catalyst comprising two catalytic components, one comprising platinum dispersed on a refractory inorganic oxide support and a second comprising palladium and rhodium dispersed on a refractory inorganic oxide support.

US Patent No. 4,587,231 discloses a method of producing a monolithic three-way catalyst for the purification of exhaust gases. First, a mixed oxide coating is provided to a monolithic carrier by treating the carrier with a coating slip in which an active alumina powder containing cerium oxide is dispersed together with a ceria powder and then baking the treated carrier. Next platinum, rhodium and/or palladium are deposited on the oxide coating by a thermal decomposition. Optionally, a zirconia powder may be added to the coating slip.

US Patent No. 4,923,842 discloses a catalytic composition for treating exhaust gases comprising a first support having dispersed thereon at least one oxygen storage component and at least one noble metal component, and having dispersed immediately thereon an overlayer comprising lanthanum oxide and optionally a second support. The layer of catalyst is separate from the lanthanum oxide. The nobel metal can include platinum, palladium, rhodium, ruthenium and iridium. The oxygen storage component can include the oxide of a metal from the group consisting of iron, nickel, cobalt and the rare earths. Illustrative of these are cerium, lanthanum, neodymium, praseodymium, etc.

US Patent No. 5,057,483, referred to above, discloses a catalyst composition suitable for three-way conversion of internal combustion engine, e.g., automobile gasoline engine, exhaust gases and includes a catalytic material disposed in two discrete coats on a carrier. The first coat includes a stabilized alumina support on which a first platinum catalytic component is dispersed. The first coat also includes bulk ceria, and may also include bulk iron oxide, a metal oxide (such as bulk nickel oxide) which is effective for the suppression of hydrogen sulfide emissions, and one or both of baria and zirconia dispersed throughout as a thermal stabilizer. The second coat, which may comprise a top coat overlying the first coat, contains a co-formed (e.g., co-precipitated) rare earth oxide-zirconia support on which a first rhodium catalytic component is dispersed, and a second activated alumina support having a second platinum catalytic component dispersed thereon. The second coat may also include a second rhodium catalytic component, and optionally, a third platinum catalytic component, dispersed as an activated alumina support.

It is a continuing goal to develop a three-way catalyst system which is inexpensive and stable. At the same time the system should have the ability to oxidize hydrocarbons and carbon monoxide while reducing nitrogen oxides to nitrogen.

### SUMMARY OF THE INVENTION

The present invention relates to a layered catalyst composite which is thermally stable up to 900°C or more, and is of the type generally referred to as a three-way conversion catalyst or TWC catalyst. The present TWC catalysts are polyfunctional in that they have the capability of substantially simultaneously catalyzing the oxidation of hydrocarbons and carbon monoxide and the reduction of nitrogen oxides. The relative layers of the catalyst composite and the specific composition of such layers provide a stable, economical system. This enables the maintenance of effective oxidation of hydrocarbons and carbon monoxide as well as enhanced conversion of nitrogen oxide compounds.

There is a first layer also referred to as a bottom or inner layer and a second layer also referred to as a top or outer layer. The first layer comprises at least one first palladium component. The first layer can optionally contain minor amounts of a platinum component based on the total platinum metal of the platinum components in the first and second layers. The second layer comprises at least two second platinum group metal components with one of the platinum group metal components being a second platinum component and the other being a rhodium component. The second layer comprises a second oxygen storage composition which comprises a diluted second oxygen storage component. The oxygen storage composition comprises a diluent in addition to the oxygen storage component. Useful and preferred diluents include refractory oxides. Diluted is used to mean that the second oxygen storage component is present in the oxygen storage composition in relatively minor amounts. The composition is a mixture which can be characterized as a composite which may or may not be a true solid solution. The second oxygen storage component is diluted to minimize interaction with the rhodium component. Such interaction may reduce long term catalytic activity.

In one aspect of the present invention, there is provided a layered catalyst composite comprising a first inner layer and a second outer layer:
the first layer comprising:
   a first support;
   a first palladium component;
   optionally a first platinum group component;
   optionally at least one first stabilizer;
   optionally at least one first rare earth metal component; and
   optionally a zirconium compound; and
the second layer comprising:
   a second support selected from the group consisting of silica, alumina and titania compounds;
   platinum group metal components, the total platinum group metal components in the second layer consisting of a second platinum component and a rhodium component;
   a second oxygen storage composition comprising a diluted second oxygen storage component; and
   optionally a zirconium component; where the amount of the second platinum component comprises from 50 to 100 weight percent, based on platinum metal, of the first and second platinum components.

In another aspect of the present invention, there is provided a method comprising the steps of:
contacting a gas comprising nitrogen oxide, carbon monoxide and hydrocarbon with a layered catalyst composite comprising a first inner layer and a second outer layer:
   the first layer comprising:
      a first support;
      a first palladium component;
      optionally a first platinum component;
      optionally at least one first stabilizer;
      optionally at least one first rare earth metal component;
      optionally a zirconium component; and
   the second layer comprising:
      a second support selected from the group consisting of silica, alumina and titania compounds;
      platinum group metal components, the total platinum group metal components in the second layer consisting of a second platinum component and a rhodium component;
      a second oxygen storage composition comprising a diluted second oxygen storage component;
      optionally a zirconium component; where the total amount of the second platinum component of the composite comprises from 50 to 100 weight percent, based on platinum metal, of the first and second platinum components.

In a further aspect of the present invention, there is provided a method comprising the steps of:
mixing a solution of at least one water-soluble, first palladium component and optionally a first water-soluble platinum component, and finely-divided, high surface area, refractory oxide which is sufficiently dry to absorb essentially all of the solution;
forming a first layer of the composite;
converting the first components in the resulting first layer to a water-insoluble form;
mixing a solution of platinum group components, the total platinum group components in said solution consisting of at least one water-soluble second platinum component and at least one water-soluble rhodium component, and finely-divided, high surface area, refractory oxide selected from the group consisting of silica, alumina and titania compounds which is sufficiently dry to absorb essentially all of the solution;
forming a second layer of the composite on the first layer;
converting the second platinum component and the rhodium component in the resulting composite to a water-insoluble form;
the amount of the second platinum component of the composite comprising from 50 to 100 weight percent, based on platinum metal, of the total of the first and second platinum components.

Exhaust gas emissions comprising hydrocarbons, carbon monoxide and nitrogen oxides first encounter the second layer. The second platinum component and the rhodium component in the second layer are believed to catalyze the reduction of nitrogen oxides to nitrogen and the oxidation of hydrocarbons and carbon monoxide. The second platinum component in the top coat is believed to promote the rhodium component, to increase rhodium's catalytic activity. The second layer preferably comprises a second oxygen storage composition comprising a second oxygen storage component such as rare earth oxide, preferably ceria. The second oxygen storage component is diluted with a diluent such as a refractory metal oxide, preferably zirconia. A particularly preferred second oxygen storage composition is a co-precipitated ceria/zirconia composite. There is preferably up to 30 weight percent ceria and at least 70 weight percent zirconia. Preferably, the oxygen storage composition comprises ceria, and one or more of lanthana, neodymia, yttria or mixtures thereof in addition to ceria. A particularly preferred particulate composite comprises ceria, neodymia and zirconia. Preferably there is from 60 to 90 wt.% zirconia, 10-30% ceria and up to 10% neodymia. The ceria not only stabilizes the zirconia by preventing it from undergoing undesirable phase transformation, but also behaves as an oxygen storage component enhancing oxidation of carbon monoxide and the reduction of nitric oxides.

Preferably, the second oxygen storage composition is in bulk form. By bulk form it is meant that the composition is in a solid, preferably fine particulate form, more preferably having a particle size distribution such that at least about 95% by weight of the particles typically have a diameter of from 0.1 to 5.0, and preferably from 0.5 to 3 micrometers. Reference to the discussion of bulk particles is made to US Patent Nos. 4,714,694 and 5,057,483.

Both the second platinum component and the rhodium component are also believed to interact with and increase the effectiveness of the second oxygen storage component in the second oxygen storage composition.

Upon passing through the top or second layer, the exhaust gas then contacts the first or bottom layer. In the bottom layer, the first palladium component and the optional first platinum component are believed to primarily enhance oxidation reactions. These reactions can be promoted by a first oxygen storage component such as ceria group compounds, preferably cerium oxide which can be in a bulk first oxygen storage composition form as used in the top layer, or be an oxygen storage component in intimate contact with the first platinum group metal component. Such intimate contact can be achieved by solution impregnation of the oxygen storage component onto the platinum group metal component.

A specific and preferred embodiment of the present invention relates to a layered catalyst composite comprising a first inner layer which comprises a first support having at least one palladium component and from 0 to less than fifty weight percent based on platinum metal of at least one first layer platinum component based on the total amount of platinum metal in the first and second layers.

Preferably, the first layer comprises a first support, a first palladium component, at least one first stabilizer, and at least one first rare earth metal component selected from ceria, neodymia and lanthana. The first layer can also comprise a first oxygen storage composition which comprises a first oxygen storage component. The second layer preferably comprises a second support, at least one second platinum component, at least one rhodium component, and a second oxygen storage composition. There can be from fifty to one hundred weight percent based on platinum metal of the second layer platinum component based on the total amount of platinum metal in the first and second layers.

The platinum group metal component support components in the first and second layers can be the same or different and are preferably compounds selected from the group consisting of silica, alumina and titania compounds. Preferred first and second supports can be activated compounds selected from the group consisting of alumina, silica, silica-alumina, alumino-silicates, alumina-zirconia, alumina-chromia, and alumina-ceria.

The second oxygen storage component and optional first oxygen storage component are preferably selected from the cerium group and preferably consist of cerium compounds, praseodymium, and/or neodymium compounds. When using cerium group compounds it has been found that if sulfur is present in the exhaust gas stream, objectionable hydrogen sulfide can form. When it is preferred to minimize hydrogen sulfide, it is preferred to additionally use Group IIA metal oxides, preferably strontium oxide and calcium oxide. Where it is desired to use cerium, praseodymium or neodymium compounds at least one of the first or second layers can further comprise a nickel or iron component to suppress hydrogen sulfide. Preferably, the first layer further comprises a nickel or iron component.

Stabilizers can be in either the first or second layers, and are preferably in the first layer. Stabilizers can be selected from at least one alkaline earth metal component derived from a metal selected from the group consisting of magnesium, barium, calcium and strontium, preferably strontium and barium.

Zirconium components in the first and/or second layers is preferred and acts as both a stabilizer and a promoter. Rare earth oxides act to promote the catalytic activity of the first layer composition. Rare earth metal components are preferably selected from the group consisting of lanthanum metal components and neodymium metal components.

When the compositions are applied as a thin coating to a monolithic carrier substrate, the proportions of ingredients are conventionally expressed as grams of material per cubic inch of catalyst as this measure accommodates different gas flow passage cell sizes in different monolithic carrier substrates. Platinum group metal components are based on the weight of the platinum group metal.

A useful and preferred first layer has:
from about 0.0175 to about 0.3 g/in³ of palladium component;
from about 0 to about 0.065 g/in³ of a first platinum component;
from about 0.15 to about 2.0 g/in³ of a first support;
from about 0.025 to about 0.5 g/in³ of at least one first alkaline earth metal component;
from about 0.025 to about 0.5 g/in³ of a first zirconium component; and
from about 0.025 to about 0.5 g/in³ of at least one first rare earth metal component selected from the group consisting of ceria metal components, lanthanum metal components and neodymium metal component.

A useful and preferred second layer has:
from about 0.001 g/in³ to about 0.03 g/in³ of a rhodium component;
from about 0.001 g/in³ to about 0.15 g/in³ of platinum;
from about 0.15 g/in³ to about 1.5 g/in³ of a second support;
from about 0.1 to 2.0 g/in³ of a second oxygen storage composition;
from about 0.025 g/in³ to about 0.5 g/in³ of at least one second rare earth metal component selected from the group consisting of lanthanum metal components and neodymium metal components; and
from about 0.025 to about 0.5 g/in³ of a second zirconium component.

The composite can be in the form of a self-supported article such as a pellet with the first layer on the inside and the second layer on the outside of the pellet. Alternatively, and more preferably, the first layer can be supported on a substrate, preferably a honeycomb carrier, and the second layer is supported on the first layer applied on the substrate.

The present invention includes a method comprising the steps of treating a gas comprising nitrogen oxide, carbon monoxide and/or hydrocarbon by contacting the gas with a layered catalyst composite as recited above.

The present invention also includes a method of preparation of the layered catalyst composite of the present invention.

### DETAILED DESCRIPTION OF THE PREFERRED EMBODIMENTS

The present invention is directed to a layered catalyst composite of the type useful as a three-way conversion catalyst or a TWC. The TWC catalyst composite of the present invention simultaneously catalyzes the oxidation of hydrocarbons and carbon monoxide and the reduction of nitrogen oxides present in a gas stream.

The layered catalyst composite comprises a first layer comprising a first layer composition and the second layer comprising a second layer composition. The first layer is also referred to as the bottom or inner layer, and the second layer is also referred to as to top or outer layer.

As recited, the gas stream initially encounters the second composition which is designed to effectively reduce nitrogen oxides to nitrogen and oxidize hydrocarbons while causing some oxidation of carbon monoxide. The gas then passes to the first layer designed to convert pollutants, including the oxidation of hydrocarbons and remaining carbon monoxide.

The specific design of the first layer results in effective oxidation of hydrocarbons over wide temperature ranges for long periods of time. In the preferred composite the first layer comprises a catalytically effective amount of palladium component. Optionally, there can be minor amounts of platinum, 0 to 50, i.e., from 0 up to 50, preferably 0 to 20 and most preferably 0 to 10 percent by weight of platinum metal based on the total platinum component used in the first and second layer. Where platinum is used, typical minimum amounts are from about 1, preferably 3 and most preferably 5 percent by weight of platinum component based on platinum metal in the first and second layers. The performance of the first layer platinum group precious metal component can be enhanced by the use of a stabilizer, preferably alkaline earth metals, promoters preferably selected from lanthanum and neodymium, and a zirconium component. An oxygen storage component is preferably also included. The oxygen storage component can be in any form, including bulk form, part of a first oxygen storage composition, in or impregnated as a solution where there can be intimate contact between the oxygen storage component and the first layer platinum group metal components. The oxygen storage component enhances oxidation in the bottom layer. Intimate contact occurs when the oxygen storage component is introduced in the form of a solution of a soluble salt which impregnates the support and other particulate material and then can be converted to an oxide form upon calcining.

The second layer comprises a second platinum component and a rhodium component. The second or top layer contains from 50 to 100 weight percent of the platinum component based on the total platinum metal in the first and second layers. For the second layer to result in higher temperature conversion efficiencies, an oxygen storage composition comprising a diluted oxygen storage component is used. A preferred oxygen storage composition is a composite comprising ceria and zirconia. This results in the second oxygen storage component having minimum intimate contact with the platinum group metal components (i.e., the rhodium and platinum components) even where the platinum group metal components are supported on the bulk oxygen storage composition particles. It is preferred to include a second zirconium component in the second layer.

The first layer composition and second layer composition respectively comprise a first support and a second support which can be the same or different support components. The support preferably comprises a high surface area refractory oxide support. Useful high surface area supports include one or more refractory oxides. These oxides include, for example, silica and alumina, include mixed oxide forms such as silica-alumina, aluminosilicates which may be amorphous or crystalline, alumina-zirconia, alumina-chromia, alumina-ceria and the like. The support is substantially comprised of alumina which preferably includes the members of the gamma or transitional alumina, such as gamma and eta aluminas, and, if present, a minor amount of other refractory oxide, e.g., about up to 20 weight percent. Desirably, the active alumina has a specific surface area of 60 to 300 m²/g.

The preferred catalyst of this invention comprises platinum group metal components present in an amount sufficient to provide compositions having significantly enhanced catalytic activity to oxidize hydrocarbons and carbon monoxide and reduce nitrogen oxides. The location of the platinum group metal components, particularly the rhodium component and palladium component and the relative amounts of platinum components in the respective first and second layers have been found to affect the durability of catalyst activity. Additionally, the use of the dilute second oxygen storage component that does not intimately contact the majority of the platinum component and rhodium components also contributes to enhanced long term catalyst activity.

In preparing the catalyst, a platinum group metal catalytic component such as a suitable compound and/or complex of any of the platinum group metals may be utilized to achieve dispersion of the catalytic component on the support, preferably activated alumina support particles. As used herein, the term "platinum group metal component" includes the recited platinum, rhodium and palladium components and means any such platinum group metal compound, complex, or the like which, upon calcination or use of the catalyst decomposes or otherwise converts to a catalytically active form, usually, the metal or the metal oxide. Water soluble compounds or water dispersible compounds or complexes of one or more platinum group metal components may be utilized as long as the liquid used to impregnate or deposit the catalytic metal compounds onto the alumina support particles does not adversely react with the catalytic metal or its compound or complex or the other components of the slurry, and is capable of being removed from the catalyst by volatilization or decomposition upon heating and/or the application of vacuum. In some cases, the completion of removal of the liquid may not take place until the catalyst is placed into use and subjected to the high temperatures encountered during operation. Generally, both from the point of view of economics and environmental aspects, aqueous solutions of soluble compounds or complexes of the platinum group metals are preferred. For example, suitable compounds are chloroplatinic acid, amine solubilized platinum hydroxide such as hexahydroxymonoethanolamine complexes of platinum, rhodium chloride, rhodium nitrate, hexamine rhodium chloride, palladium nitrate or palladium chloride, etc. During the calcination step, or at least during the initial phase of use of the catalyst, such compounds are converted into a catalytically active form of the platinum group metal or a compound thereof, typically an oxide.

The catalyst of the present invention can contain a first oxygen storage component in the first layer which can be in bulk form or in intimate contact with the platinum group metal component, i.e., palladium. The oxygen storage component is any such material known in the art and preferably at least one oxide of a metal selected from the group consisting of rare earth metals, most preferably a cerium, praseodymium or a neodymium compound with the most preferred oxygen storage component being cerium oxide (ceria).

In the composition of the first layer, the oxygen storage component can be included by dispersing methods known in the art. Such methods can include impregnation onto the first support composition. The oxygen storage component can be in the form of an aqueous solution. Drying and calcining the resulted mixture in air results in a first layer which contains an oxide of the oxygen storage component in intimate contact with the platinum group metal component. Typically, impregnation means that there is substantially sufficient liquid to fill the pores of the material being impregnated. Examples of water soluble, decomposable oxygen storage components which can be used include, but are not limited to, cerium acetate, praseodymium acetate, cerium nitrate, praseodymium nitrate, etc. US Patent No. 4,189,404 discloses the impregnation of alumina based support composition with cerium nitrate.

In the second layer, there is a second oxygen storage composition which is optionally and preferably in bulk form. The second oxygen storage composition comprises a second oxygen storage component which is preferably a cerium group component preferably ceria, praseodymia and/or neodymia, and most preferably ceria. By bulk form it is meant that the composition comprising ceria and/or praseodymia is present as discrete particles which may be as small as 0.1 to 15 microns in diameter or smaller, as opposed to having been dispersed in solution as in the first layer. A description and the use of such bulk components is presented in US Patent 4,714,694. As noted in US Patent 4,727,052, bulk form includes oxygen storage composition particles of ceria admixed with particles of zirconia, or zirconia activated alumina. It is particularly preferred to dilute the oxygen storage component as part of an oxygen storage component composition.

The oxygen storage component composition used in the second layer comprises an oxygen storage component, preferably ceria, and a diluent component. The diluent component can be any suitable filler which is inert to interaction with platinum group metal components so as not to adversely affect the catalytic activity of such components. A useful diluent material is a refractory oxide with preferred refractory oxides being of the same type of materials recited below for use as catalyst supports. Most preferred is a zirconium compound with zirconia most preferred. Therefore, a preferred oxygen storage component is a ceria-zirconia composite. There can be from 1 to 99, preferably 1 to 50, more preferably 5 to 30 and most preferably 10 to 25 weight percent ceria based on the ceria and zirconia. A preferred oxygen storage composition for use in the second layer composition, and optionally the first layer composition, can comprise a composite comprising zirconia, ceria and at least one rare earth oxide. Such materials are disclosed for example in US Patent Nos. 4,624,940 and 5,057,483. Particularly preferred are particles comprising greater than 50% of a zirconia-based compound and preferably from 60 to 90% of zirconia, from 10 to 30 wt.% of ceria and optionally up to 10 wt.%, and when used at least 0.1 wt.%, of a non-ceria rare earth oxide useful to stabilize the zirconia selected from the group consisting of lanthana, neodymia and yttria.

The first layer composition optionally and preferably comprises a component which imparts stabilization. The stabilizer can be selected from the group consisting of alkaline earth metal compounds. Preferred compounds include compounds derived from metals selected from the group consisting of magnesium, barium, calcium and strontium. It is known from US Patent, No. 4,727,052 that support materials, such as activated alumina, can be thermally stabilized to retard undesirable alumina phase transformations from gamma to alpha at elevated temperatures by the use of stabilizers or a combination of stabilizers. While a variety of stabilizers are disclosed, the first layer composition of the present invention preferably use alkaline earth metal components. The alkaline earth metal components are preferably alkaline earth metal oxides. In particularly preferred compositions, it is desirable to use barium oxide and/or strontium oxide as the compound in the first layer composition. The alkaline earth metal can be applied in a soluble form which upon calcining becomes the oxide. It is preferred that the soluble barium be provided as barium nitrite or barium hydroxide and the soluble strontium provided as strontium nitrate or acetate, all of which upon calcining become the oxides.

One aspect of the present invention provides for applying one or more thermal stabilizers to a previously calcined coating of the activated alumina and catalytic components on a carrier substrate. In other aspects of the invention, one or more modifiers may be applied to the activated alumina either before or after the alumina particles are formed into an adherent, calcined coating on the carrier substrate. (As used herein, a "precursor", whether of a thermal stabilizer, or other modifier or other component, is a compound, complex or the like which, upon calcining or upon use of the catalyst, will decompose or otherwise be converted into, respectively, a thermal stabilizer, other modifier or other component.) The presence of one or more of the metal oxide thermal stabilizers typically tends to retard the phase transition of high surface area aluminas such as gamma and eta aluminas to alpha-alumina, which is a low surface area alumina. The retardation of such phase transformations tend to prevent or reduce the occlusion of the catalytic metal component by the alumina with the consequent decrease of catalytic activity.

In the first layer composition, the amount of thermal stabilizer combined with the alumina may be from about 0.05 to 30 weight percent, preferably from about 0.1 to 25 weight percent, based on the total weight of the combined alumina, stabilizer and catalytic metal component.

Both the first layer composition and the second layer composition can contain a compound derived from zirconium, preferably zirconium oxide. The zirconium compound can be provided as a water soluble compound such as zirconium acetate or as a relatively insoluble compound such as zirconium hydroxide. There should be an amount sufficient to enhance the stabilization and promotion of the respective compositions.

The first layer composition preferably contains at least one first promoter selected from the group consisting of lanthanum metal components and neodymium metal components with the preferred components being lanthanum oxide (lanthana) and neodymium oxide (neodymia). In a particularly preferred composition, there is lanthana and optionally a minor amount of neodymia in the bottom layer, and neodymia or optionally lanthana in the top coat. While these compounds are disclosed to act as stabilizers, they can also act as reaction promoters. A promoter is considered to be a material which enhances the conversion of a desired chemical to another. In a TWC the promoter enhances the catalytic conversion of carbon monoxide and hydrocarbons into water and carbon dioxide and nitrogen oxides into nitrogen and oxygen.

The first layer preferably contains lanthanum and neodymia and/or neodymium in the form of their oxides. Preferably, these compounds are initially provided in a soluble form such as an acetate, halide, nitrate, sulfate or the like to impregnate the solid components for conversion to oxides. It is preferred that in the first layer, the promoter be in intimate contact with the other components in the composition including and particularly the platinum group metal.

The first layer composition and/or the second layer composition of the present invention can contain other conventional additives such as sulfide suppressants, e.g., nickel or iron components. If nickel oxide is used, an amount from about 1 to 25% by weight of the first coat can be effective, as disclosed in commonly owned U.S. Patent No. 5,212,142.

A particularly useful layered catalyst composite of the present invention comprises in the first layer from about 0.025 to 0.10 g/in³ of the palladium component; from about 0 to 0.01 g/in³ of the first platinum component; from about 0.15 to about 1.5 g./in³ of the first support, i.e., alumina; at least about 0.05 g/in³ of the first oxygen storage component; from about 0.025 to about 0.5 g/in³ of at least one first alkaline earth metal components; from about 0.025 to about 0.5 g/in³ of the first zirconium component; from about 0.0 to about 0.5 g/in³ of at least one first rare earth metal component selected from the group consisting of lanthanum metal components and neodymium metal components; and comprises in the second layer from about 0.001 to 0.02 g/in³ of the second platinum component and from about 0.001 to 0.01 g/in³ of the rhodium component from about 0.15 g/in³ to about 1.0 g/in³ of the second support, i.e., alumina; from about 0.1 g/in³ to about 1.5 g/in³ of a second oxygen storage composite which comprises a particulate composite of zirconia and ceria; and from about 0.025 to about 0.5 g/in³ of the second zirconium component. This first and/or second layers can further comprise from about 0.025 g/in³ to about 0.5 g/in³ of a nickel component. The particulate composite of zirconia and ceria can comprise 60 to 90 wt.% zirconia, 10 to 30 wt.% ceria and from 0 to 10 wt% rare earth oxides comprising lanthana, neodymia and mixtures thereof.

The catalyst composite can be coated in layers on a monolithic substrate generally which can comprise from about 0.50 to about 6.0, preferably about 1.0 to about 5.0 g/in³ of catalytic composition based on grams of composition per volume of the monolith. The catalyst composite of the present invention can be made by any suitable method. A preferred method comprises mixing a first mixture of a solution of at least one water-soluble, first palladium component and optionally a first platinum component, and finely-divided, high surface area, refractory oxide which is sufficiently dry to absorb essentially all of the solution.

The first palladium component and optional platinum component are added to water to form a first slurry and preferably comminuted in the first slurry. Preferably, the slurry is acidic, having a pH of less than 7 and preferably from 3 to 7. The pH is preferably lowered by the addition of an acid, preferably acetic acid to the slurry. In particularly preferred embodiments the first slurry is comminuted to result in substantially all of the solids having particle sizes of less than 10 micrometers in average diameter. The first slurry can be formed into a first layer and dried. The first palladium component and optional platinum component in the resulting first mixture in the first layer are converted to a water insoluble form. The palladium and platinum components can be converted to insoluble form chemically or by calcining. The first layer is preferably calcined, preferably at at least 250°C.

A second mixture of a solution of at least one water-soluble second platinum component and at least one water-soluble rhodium component, and finely-divided, high surface area, refractory oxide which is sufficiently dried to absorb essentially all of the solution is mixed. The second platinum component and second rhodium component are added to water to form a second slurry and preferably comminuted in the second slurry. Preferably, the second slurry is acidic, having a pH of less than 7 and preferably from 3 to 7. The pH is preferably lowered by the addition of an acid, preferably acidic acid to the slurry. In particularly preferred embodiments the second slurry is comminuted to result in substantially all of the solids having particle sizes of less than 10 micrometers in average diameter. The second slurry can be formed into a second layer on the first layer and dried. The second platinum group component and second rhodium component in the resulting second mixture are converted to a water insoluble form. The platinum and rhodium components can be converted to insoluble form chemically or by calcining. The second layer is preferably then calcined, preferably at at least 250°C.

Each layer of the present composite can also be prepared by the method in disclosed in U.S. Patent No. 4,134,860 generally recited as follows.

A finely-divided, high surface area, refractory oxide support is contacted with a solution of a water-soluble, catalytically-promoting metal component, preferably containing one or more platinum group metal components, to provide a mixture which is essentially devoid of free or unabsorbed liquid. The catalytically-promoting platinum group metal component of the solid, finely-divided mixture can be converted at this point in the process into an essentially water-insoluble form while the mixture remains essentially free of unabsorbed liquid. This process can be accomplished by employing a refractory oxide support, e.g., alumina, including stabilized aluminas, which is sufficiently dry to absorb essentially all of the solution containing the catalytically-promoting metal component, i.e., the amounts of the solution and the support, as well as the moisture content of the latter, are such that their mixture has an essential absence of free or unabsorbed solution when the addition of the catalytically-promoting metal component is complete. During the latter conversion or fixing of the catalytically-promoting metal component on the support, the composite remains essentially dry, i.e. it has substantially no separate or free liquid phase.

The mixture containing the fixed, catalytically-promoting metal component can be comminuted as a slurry which is preferably acidic, to provide solid particles that are advantageously primarily of a size of up to about 5 to 15 microns. The resulting slurry is preferably used to coat a macrosize carrier, preferably having a low surface area, and the composite is dried and may be calcined. In these catalysts the composite of the catalytically-promoting metal component and high area support exhibits strong adherence to the carrier, even when the latter is essentially non-porous as may be the case with, for example, metallic carriers, and the catalysts have very good catalytic activity and life when employed under strenuous reaction conditions. Each of the first and second layers can be succeedingly applied and calcined to font the composite of the present invention.

The method provides compositions of uniform and certain catalytically-promoting metal content since essentially all of the platinum group metal component thereby added to the preparation system remains in the catalyst, and the compositions contain essentially the calculated amount of the single or plural active catalytically-promoting metal components. In some instances a plurality of catalytically-active metal components may be deposited simultaneously or sequentially on a given refractory oxide support. The intimate mixing of separately prepared catalytically-promoting metal component refractory oxide composites of different composition made by the procedure of this invention, enables the manufacture of a variety of catalyst whose metal content may be closely controlled and selected for particular catalytic effects. Such mixed composites may, if desired, contain one or more catalytically- promoting metal components on a portion of the refractory oxide support particles, and one or more different catalytically-promoting metal components on another portion of the refractory oxide support particles. For example, the composite may have a platinum group metal component on a portion of the refractory oxide particles, and a base metal component on a different portion of the refractory oxide particles. Alternatively, different platinum group metals or different base metals may be deposited on separate portions of the refractory oxide support particles in a given composite. It is, therefore, apparent that this process is highly advantageous in that it provides catalysts which can be readily varied and closely controlled in composition.

Precious metal group or base metal group components, alone or in mixtures, may be formed in separate first and second layers on a high surface area refractory oxide which can be subsequently deposited on a macrosize carrier. This provides the maximum availability of platinum metal components which are present in small quantities by depositing them on the outer surface of the carrier. The latter method permits deposition of substantially discrete layers of various metal components on high surface area refractory oxides in order to obtain maximum use of expensive catalytic components or to achieve certain catalytic advantages, such as, an inlet portion being coated with components to give light-off or reaction-starting activity at relatively low temperatures. If the metal components are not selectively deposited on the carrier and fixed to the refractory oxide, they may move freely from one layer of the catalyst to the next.

In accordance with this method the mixture of the catalytically-promoting metal component and refractory oxide support can be prepared by mixing an aqueous solution containing a water-soluble form of the catalytically-promoting metal with a finely-divided, high surface area support to essentially completely absorb the solution in the support. The solution may contain one or more water-soluble compounds of a precious metal or a base metal. Water-soluble platinum group metal components are preferred to be in the form of a basic compound such as a platinum hydroxide or tetramine complex, or an acidic compound such as chloroplatinic acid or rhodium nitrate. The useful base metal compounds include the water-soluble salts such as the nitrates, formates, other oxygen-containing compounds and the like. The separate compounds of the catalytically-promoting metals may be added to the support in one or more aqueous solutions to provide two or more metals on given support particles.

After the catalytically-promoting metal solution and high area refractory oxide support are combined the catalytically-promoting metal component can be fixed on the support, i.e., converted to essentially water-insoluble form, while the composite remains essentially devoid of free or unabsorbed aqueous medium. The conversion may be effected chemically, by treatment with a gas such as hydrogen sulfide or hydrogen or with a liquid such as acetic acid or other agents which may be in liquid form, especially an aqueous solution, e.g. hydrazine. The amount of liquid used, however, is not sufficient for the composite to contain any significant or substantial amount of free or unabsorbed liquid during the fixing of the catalytically-promoting metal on the support. The fixing treatment may be with a reactive gas or one which is essentially inert; for example, the fixing may be accomplished by calcining the composite in air or other gas which may be reactive with the catalytically-promoting metal component or essentially inert. The resulting insoluble or fixed catalytically-promoting metal component may be present as a sulfide, oxide, elemental metal or in other forms. When a plurality of catalytically-promoting metal components are deposited on a support, fixing may be employed after each metal component deposition or after deposition of a plurality of such metal components.

The particle size of the finely-divided, high surface area, refractory oxide support is generally above about 10 or 15 micrometers. As noted above, when combined with the catalytically-promoting metal-containing solution the high area support is sufficiently dry to absorb essentially all of the solution.

In making catalysts by this invention, the catalytically-active composite of the fixed or water-insoluble catalytically-promoting metal component and high area support can be combined with a macrosize carrier, preferably of low total surface area. This can be accomplished by first comminuting the catalytically-active composite or plurality of such composites, as an aqueous slurry which is preferably acidic. This treatment is usually continued until the solid particles in the slurry have particle sizes which are mostly below about 10 or 15 micrometers. The comminution can be accomplished in a ball mill or other suitable equipment, and the solids content of the slurry my be, for instance, about 20 to 50 weight percent, preferably about 35 to 45 weight percent. The pH of the slurry is preferably below about 5 and acidity may be supplied by the use of a minor amount of a water-soluble organic or inorganic acid or other water-soluble acidic compounds. Thus the acid employed may be hydrochloric or nitric acid, or more preferably a lower fatty acid such as acetic acid, which may be substituted with, for example, chlorine as in the case of trichloroacetic acid. The use of fatty acids may serve to minimize any loss of platinum group metal from the support.

In order to deposit the catalytically-promoting group metal-support composite on the macrosized carrier, one or more comminuted slurries are combined separately or together with the carrier in any desired manner. Thus the carrier may be dipped one or more times in the slurry, with intermediate drying if desired, until the appropriate amount of slurry is on the carrier. The slurry employed in depositing the catalytically-promoting metal component-high area support composite on the carrier will often contain about 20 to 50 weight percent of finely-divided solids, preferably about 35 to 45 weight percent.

The layered catalyst composite can be used in the form of a self-supporting structure such as a pellet or on a suitable carrier or substrate, such as a metallic or ceramic honeycomb.

The first layer composition of the present invention and second layer composition of the present invention can be prepared and formed into pellets by known means or applied to a suitable substrate, preferably a metal or ceramic honeycomb carrier. The comminuted catalytically-promoting metal component-high surface area support composite can be deposited on the carrier in a desired amount, for example, the composite may comprise about 2 to 30 weight percent of the coated carrier, and is preferably about 5 to 20 weight percent. The composite deposited on the carrier is generally formed as a coating over most, if not all, of the surfaces of the carrier contacted. The combined structure may be dried and calcined, preferably at a temperature of at least about 250°C. but not so high as to unduly destroy the high area of the refractory oxide support, unless such is desired in a given situation.

The carriers useful for the catalysts made by this invention may be metallic in nature and be composed of one or more metals or metal alloys. The metallic carriers may be in various shapes such as pellets or in monolithic form. Preferred metallic supports include the heat-resistant, base-metal alloys, especially those in which iron is a substantial or major component. Such alloys may contain one or more of nickel, chromium, and aluminum, and the total of these metals may advantageously comprise at least about 15 weight percent of the alloy, for instance, about 10 to 25 weight percent of chromium, about 3 to 8 weight percent of aluminum and up to about 20 weight percent of nickel, say at least about 1 weight percent of nickel, if any or more than a trace amount be present. The preferred alloys may contain small or trace amounts of one or more other metals such as manganese, copper, vanadium, titanium and the like. The surfaces of the metal carriers may be oxidized at quite elevated temperatures, e.g. at least about 1000°C., to improve the corrosion resistance of the alloy by forming an oxide layer on the surface of carrier which is greater in thickness and of higher surface area than that resulting from ambient temperature oxidation. The provision of the oxidized or extended surface on the alloy carrier by high temperature oxidation may enhance the adherence of the refractory oxide support and catalytically-promoting metal components to the carrier.

Any suitable carrier may be employed, such as a monolithic carrier of the type having a plurality of fine, parallel gas flow passages extending therethrough from an inlet or an outlet face of the carrier, so that the passages are open to fluid flow therethrough. The passages, which are essentially straight from their fluid inlet to their fluid outlet, are defined by walls on which the catalytic material is coated as a "washcoat" so that the gases flowing through the passages contact the catalytic material. The flow passages of the monolithic carrier are thin-walled channels which can be of any suitable cross-sectional shape and size such as trapezoidal, rectangular, square, sinusoidal, hexagonal, oval, circular. Such structures may contain from about 60 to about 600 or more gas inlet openings ("cells") per square inch of cross section. The ceramic carrier may be made of any suitable refractory material, for example, cordierite, cordierite-alpha alumina, silicon nitride, zircon mullite, spodumene, alumina-silica magnesia, zircon silicate, sillimanite, magnesium silicates, zircon, petalite, alpha alumina and aluminosilicates. The metallic honeycomb may be made of a refractory metal such as a stainless steel or other suitable iron based corrosion resistant alloys.

Such monolithic carriers may contain up to about 700 or more flow channels ("cells") per square inch of cross section, although far fewer may be used. For example, the carrier may have from about 60 to 600, more usually from about 200 to 400, cells per square inch ("cpsi").

The catalytic compositions made by the present invention can be employed to promote chemical reactions, such as reductions, methanations and especially the oxidation of carbonaceous materials, e.g., carbon monoxide, hydrocarbons, oxygen-containing organic compounds, and the like, to products having a higher weight percentage of oxygen per molecule such as intermediate oxidation products, carbon dioxide and water, the latter two materials being relatively innocuous materials from an air pollution standpoint. Advantageously, the catalytic compositions can be used to provide removal from gaseous exhaust effluents of uncombusted or partially combusted carbonaceous fuel components such as carbon monoxide, hydrocarbons, and intermediate oxidation products composed primarily of carbon, hydrogen and oxygen, or nitrogen oxides. Although some oxidation or reduction reactions may occur at relatively low temperatures, they are often conducted at elevated temperatures of, for instance, at least about 150°C., preferably about 200° to 900°C., and generally with the feedstock in the vapor phase. The materials which are subject to oxidation generally contain carbon, and may, therefore, be termed carbonaceous, whether they are organic or inorganic in nature. The catalysts are thus useful in promoting the oxidation of hydrocarbons, oxygen-containing organic components, and carbon monoxide, and the reduction of nitrogen oxides. These types of materials may be present in exhaust gases from the combustion of carbonaceous fuels, and the catalysts are useful in promoting the oxidation or reduction of materials in such effluents. The exhaust from internal combustion engines operating on hydrocarbon fuels, as well as other waste gases, can be oxidized by contact with the catalyst and molecular oxygen which may be present in the gas stream as part of the effluent, or may be added as air or other desired form having a greater or lesser oxygen concentration. The products from the oxidation contain a greater weight ratio of oxygen to carbon than in the feed material subjected to oxidation. Many such reaction systems are known in the art.

The present invention is illustrated further by the following examples which are not intended to limit the scope of this invention.

### EXAMPLE

### A. The First Layer

A quantity of 1944 grains of gamma alumina powder having a surface area of 150 square meters per gram was impregnated with an aqueous palladium nitrate solution containing 107 grams of palladium. 972 grams of co-formed ceria-zirconia powder (surface area 50 m²/g containing 20 wt% CeO₂) was impregnated a hexahydroxymonoethanolamine platinum complex containing 2.25 grams of platinum metal as the first platinum component. The palladium-containing alumina and platinum/ceria-zirconia complex were combined with, lanthanum nitrate in an amount sufficient to form 146 grams La₂O₃, neodymium nitrate in an amount sufficient to form 194 grams of Nd₂O₃, strontium acetate in an amount sufficient to form 486 grams SrO, zirconium acetate solution in an amount sufficient to form 97 grams ZrO₂ and were ballmilled with 148 grams of glacial acetic acid and sufficient water to form a 48 percent by weight solids aqueous slurry. A monolith support of cordierite containing about 400 flow passages per square inch of cross section and 5 inches long was dipped into the washcoat slurry. The monolith had an oval cross section 3.18 inches by 6.68 inches. The excess liquid was blown off of the monolith with compressed air. The resultant catalyzed monolith was dried at 100°C. for about 20 minutes and calcined at 450°C. for 30 minutes. The resulting monolith contained 92 g/ft³ palladium, 2.0 g/ft³ platinum, 1.0 g/in³ alumina, 0.10 g/in³ NdO₂, 0.075 g/in³ La₂O₃, 0.05 g/in³ ZrO₂, 0.25 g/in³ SrO, 0.50 g/in³ ceria-zirconia composite.

### B. The Second Layer

A rhodium nitrate aqueous solution containing 75 grams of rhodium metal and the same platinum compound as used in the first layer solution containing 27.6 grams platinum metal were sequentially impregnated onto 2358 grams of the same type of ceria/zirconia composite used in the first layer. The impregnated rhodium and platinum composite was combined with 982 grams of the same type of alumina as used in the first layer, and zirconium acetate solution in an amount sufficient to form 147 grams ZrO₂. The composition was ballmilled with 49 grams glacial acetic acid and sufficient water to form a 46 percent by weight solids, aqueous slurry to form a washcoat. This was diluted to 44 weight percent solids to form the second layer slurry. The monolith layered with the first layer in Part A of this Example was dipped in the second layer slurry. After blowing off the excess and drying at 100°C for about 20 minutes and calcining for 30 minutes at 450°C, the second layer had 7.3 g/ft³ rhodium, 5.0 g/ft³ platinum, 1.20 g/in³ ceria-zirconia composite, 0.5 g/in³ alumina, and 0.075 g/in³ ZrO₂.

A catalyzed honeycomb monolith made according to a process similar to that described above was aged on an engine dynamometer system at 900°C inlet temperature for 100 hours. The catalyzed honeycomb underwent cyclic aging with each cycle consisting of: 60 seconds of stoichiometric automotive exhaust gas composition; followed by 3 second stopping of fuel injection to engine (leading to an oxidizing gas composition), and then a 2 second idle. The space velocity wa 95,000 VHSV.

The honeycomb monolith was then evaluated using an FTP75 cycle using a BMW 320i, 6 cylinder 2 liter engine with Bosch Notronic 1.1 controls. Secondary air injected at a volume of 3.5 m³/hour into the manifold for the first 125 seconds for the FTP75 Phase 1. The fuel contained 140 parts per million sulphur. The emissions were 0.556 grams of total hydrocarbon per mile; 3.4 grams of CO per mile; and 1.12 grams of NOx per mile.

Modifications, changes and improvements to the preferred forms of the invention herein disclosed may occur to those skilled in the art. Accordingly, the scope of the patent to be issued hereon should not be limited to the particular embodiments of the invention set forth herein, but rather should be limited by the advance of which the invention has promoted the art

### Conversion of Units

Measurements that have been expressed in non-SI units may be converted into their SI equivalents by means of the following conversion factors:
1 g/in³ = 61.024 g/dm³
1 cell per square inch (cpsi) = 15.5 cells per dm²
1 g/ft³ = 0.0353 g/dm³
1 gram per mile = 0.6214 g/km.

## Claims

1. A layered catalyst composite comprising a first inner layer and a second outer layer:
the first layer comprising:
a first support;
a first palladium component;
optionally a first platinum group component;
optionally at least one first stabilizer;
optionally at least one first rare earth metal component; and
optionally a zirconium component; and
the second layer comprising:
a second support selected from the group consisting of silica, alumina and titania compounds;
platinum group metal components, the total platinum group metal components in the second layer consisting of a second platinum component and a rhodium component;
a second oxygen storage composition comprising a diluted second oxygen storage component; and
optionally a zirconium component; where the amount of the second platinum component comprises from 50 to 100 weight percent, based on platinum metal, of the first and second platinum components.

2. The layered catalyst composite as recited in claim 1 wherein the first support is selected from the group consisting of silica, alumina and titania compounds.

3. The layered catalyst composite as recited in claim 1 wherein the first and second supports are the same or different and are activated compounds selected from the group consisting of alumina, silica, silica-alumina, alumino-silicates, alumina-zirconia, alumina-chromia, and alumina-ceria.

4. The layered catalyst composite as recited in claim 3 wherein the first and second supports are activated alumina.

5. The layered catalyst composite as recited in claim 1 wherein the first layer further comprises from 1 to 20 weight percent based on platinum metal of the first platinum component based on the total of the first and second platinum components.

6. The layered catalyst composite as recited in claim 5 wherein the first layer further comprises at least one first oxygen storage composition which comprises a first oxygen storage component.

7. The layered catalyst composite as recited in claim 6 wherein the oxygen storage composition is in bulk form.

8. The layered catalyst composite as recited in claim 7 wherein the first oxygen storage component and second oxygen storage components are the sane or different and are selected from the group consisting of cerium, neodymium and praseodymium compounds.

9. The layered catalyst composite as recited in claim 8 wherein the first oxygen storage component is ceria.

10. The layered catalyst composite as recited in claim 1 where the second oxygen storage composition comprises a refractory oxide and a second oxygen storage component.

11. The layered catalyst composite as recited in claim 10 wherein the second oxygen storage composition comprises a ceria oxygen storage component and zirconia refractory oxide composite.

12. The layered catalyst composite as recited in claim 1 wherein at least one of the first or second layers further comprises a nickel or iron component.

13. The layered catalyst composite as recited in claim 12 wherein the first layer further comprises a nickel or iron component.

14. The layered catalyst composite as recited in claim 1 wherein the first stabilizer is at least one first layer alkaline earth metal component derived from a metal selected from the group consisting of magnesium, barium, calcium and strontium.

15. The layered catalyst composite as recited in claim 14 wherein the at least one first alkaline earth metal component is derived from a metal selected from the group consisting of strontium and barium.

16. The layered catalyst composite as recited in claim 15 wherein the first alkaline earth metal component is barium oxide.

17. The layered catalyst composite as recited in claim 15 wherein the second alkaline earth metal component is strontium oxide.

18. The layered catalyst composite as recited in claim 1 wherein at least one of said first rare earth metal component is selected from the group consisting of lanthanum components and neodymium components.

19. The layered catalyst composite as recited in claim 1 wherein the at least one first rare earth component is derived from neodymium.

20. The layered catalyst composite as recited in claim 19 wherein the at least one first rare earth component is derived from lanthanum.

21. The layered catalyst composite as recited in claim 1 wherein the composite is in the form of a pellet with the first layer on the inside and the second layer on the outside of the pellet.

22. The layered catalyst composite as recited in claim 1 wherein the first layer is supported on a substrate and the second layer is supported on the first layer opposite the substrate.

23. The layered catalyst composite as recited in claim 22 wherein the substrate comprises a honeycomb carrier.

24. The layered catalyst composite as recited in claim 1 wherein at least one of the first and second layers further comprise a particulate composite of zirconia compound and rare earth oxide.

25. The layered catalyst composite as recited in claim 24 wherein the rare earth oxide is ceria and, optionally, further comprises lanthana, neodymia and mixtures thereof.

26. The layered catalyst composite as recited in claim 1 wherein there is:
from about 0.0175 to about 0.3 g/in³ (1.068 to 18.31 g/dm³) of palladium component;
from about 0 to about 0.065 g/in³ (0 to 3.97 g/dm³) of a first platinum component;
from about 0.15 to about 2.0 g/in³ (9.15 to 122 g/dm³) of the first support;
from about 0.025 to about 0.5 g/in³ (1.53 to 30.5 g/dm³) of at least one first alkaline earth metal components;
from about 0.025 to about 0.5 g/in³ (1.53 to 30.5 g/dm³) of the first zirconium component;
from about 0.025 to about 0.5 g/in³ (1.53 to 30.5 g/dm³) of at least one first rare earth metal component selected from the group consisting of ceria metal components, lanthanum metal components and neodymium metal components;
from about 0.001 g/in³ (0.061 g/dm³) to about 0.03 g/in³ (1.83 g/dm³) of a rhodium component;
from about 0.001 g/in³ (0.061 g/dm³) to about 0.15 g/in³ (9.15 g/dm³) of platinum;
from about 0.15 g/in³ (9.15 g/dm³) to about 1.5 g/in³ (91.54 g/dm³) of the second support;
from about 0.1 to 2 g/in³ (6.1 to 122 g/dm³) of the second oxygen storage composition; from about 0.025 g/in³ to about 0.5 g/in³ (1.53 to 30.5 g/dm³) of at least one second rare earth metal component selected from the group consisting of lanthanum metal components and neodymium metal components; and
from about 0.025 to about 0.5 g/in³ (1.53 to 30.5 g/dm³) of the second zirconium component.

27. The layered catalyst composite as recited in claim 26 wherein at least one of the first and second layers further comprises from about 0.025 g/in³ to about 0.5 g/in³ (1.53 to 30.5 g/dm³) of a nickel component.

28. The layered catalyst composite as recited in claim 26 wherein at least one of the first and second layers further comprises from about 0.1 g/in³ to about 1.0 g/in³ (6.1 to 61 g/dm³) of a particulate composite of zirconia and ceria and optionally further comprising lanthana, neodymia and mixtures thereof.

29. The layered catalyst composite as recited in claim 28 herein the particulate composite of zirconia and ceria comprises 60 to 90 wt.% zirconia, 10 to 30 wt.% ceria and from 0 to 10 wt.% rare earth oxides comprising lanthana, neodymia, yttria and mixtures thereof.

30. The layered catalyst composite as recited in claim 1 further comprising:
at least one first stabilizer; and
at least one first rare earth metal component.

31. A method comprising the steps of:
contacting a gas comprising nitrogen oxide, carbon monoxide and hydrocarbon with a layered catalyst composite comprising a first inner layer and a second outer layer:
the first layer comprising:
a first support;
a first palladium component;
optionally a first platinum component;
optionally at least one first stabilizer;
optionally at least one first rare earth metal component;
optionally a zirconium component; and
the second layer comprising:
a second support selected from the group consisting of silica, alumina and titania compounds;
platinum group metal components, the total platinum group metal components in the second layer consisting of a second platinum component and a rhodium component;
a second oxygen storage composition comprising a diluted second oxygen storage component;
optionally a zirconium component; where the total amount of the second platinum component of the composite comprises from 50 to 100 weight percent, based on platinum metal, of the first and second platinum components.

32. A method comprising the steps of:
mixing a solution of at least one water-soluble, first palladium component and optionally a first water-soluble platinum component, and finely-divided, high surface area, refractory oxide which is sufficiently dry to absorb essentially all of the solution;
forming a first layer of the composite;
converting the first components in the resulting first layer to a water-insoluble form;
mixing a solution of platinum group components, the total platinum group components in said solution consisting of at least one water-soluble second platinum component and at least one water-soluble rhodium component, and finely-divided, high surface area, refractory oxide selected from the group consisting of silica, alumina and titania compounds which is sufficiently dry to absorb essentially all of the solution;
forming a second layer of the composite on the first layer;
converting the second platinum component and the rhodium component in the resulting composite to a water-insoluble form;
the amount of the second platinum component of the composite comprising from 50 to 100 weight percent, based on platinum metal, of the total of the first and second platinum components.

33. The method of claim 32 further comprising the steps of forming the first layer on a substrate.

34. The method of claim 33 further comprising the steps of forming the first layer on a honeycomb substrate.

35. The method of claim 34 wherein the step of converting the first palladium and platinum components comprises calcining the first layer.

36. The method of claim 35 wherein the step of converting second platinum and rhodium components comprises calcining the supported second layer.

37. The method as recited in claim 32 further comprising the steps of:
fixing the first palladium component on the refractory oxide; and
adding an oxygen storage composition comprising a diluted oxygen storage component to the mixture of the solution of at least one water-soluble second platinum component and at least one water-soluble rhodium component, and finely-divided, high surface area, refractory oxide.

38. The method of claim 32 or 37 further comprising the steps of:
comminuting the water-insoluble, first palladium and platinum components in a first slurry,
forming a first layer of the first slurry, and drying the first slurry; and
comminuting the water-insoluble, second rhodium and platinum components in a second slurry;
forming a second layer of the second slurry on the first layer, and drying the second slurry.

39. The method as recited in claim 38 wherein the first slurry is acidic.

40. The method as recited in claim 38 wherein the second slurry is acidic.

41. The method of claim 32 or 37 wherein said comminuting provides a slurry in which most of the solids have particle sizes of less than about 10 microns.

42. The method of claim 40 in which said resulting composite is calcined at a temperature of at least about 250°C.

43. The method of claim 32 or 37 wherein at least one of said first and second slurry contains acetic acid.

44. The method of claim 32 or 37 in which said resulting composite is calcined.

## Patentansprüche

1. Schichtenförmige Katalysator-Zusammensetzung, die eine erste innere Schicht und eine zweite äußere Schicht umfaßt, wobei
die erste Schicht umfaßt einen ersten Träger; eine erste Palladium-Komponente; gegebenenfalls eine erste Platin-Gruppe-Komponente; gegebenenfalls mindestens einen ersten Stabilisator; gegebenenfalls mindestens eine erste Seltene Erdmetall-Komponente; und gegebenenfalls eine Zirkonium-Komponente; und
die zweite Schicht umfaßt einen zweiten Träger, ausgewählt aus der Gruppe, die besteht aus Siliciumdioxid-, Aluminiumoxid- und Titandioxid-Verbindungen;
Platingruppe-Metall-Komponenten, wobei die Gesamtheit der Platingruppe-Metall-Komponenten in der zweiten Schicht aus einer zweiten Platin-Komponente und einer Rhodium-Komponente besteht; eine zweite Sauerstoffspeicher-Zusammensetzung, die eine verdünnte zweite Sauerstoffspeicher-Komponente umfaßt; und gegebenenfalls eine Zirkonium-Komponente; wobei die Menge der zweiten Platin-Komponente 50 bis 100 Gew.-%, berechnet als Platinmetall, der ersten und zweiten Platin-Komponenten ausmacht.

2. Schichtenförmige Katalysator-Zusammensetzung nach Anspruch 1, worin der erste Träger ausgewählt wird aus der Gruppe, die besteht aus Siliciumdioxid-, Aluminiumoxid- und Titandioxid-Verbindungen.

3. Schichtenförmige Katalysator-Zusammensetzung nach Anspruch 1, worin der erste Träger und der zweite Träger gleich oder verschieden sind und aktivierte Verbindungen darstellen, die ausgewählt werden aus der Gruppe, die besteht aus Aluminiumoxid, Siliciumdioxid, Siliciumdioxid-Aluminiumoxid, Aluminosilicaten, Aluminiumoxid-Zirkoniumdioxid, Aluminiumoxid-Chromoxid und Aluminiumoxid-Cerdioxid.

4. Schichtenförmige Katalysator-Zusammensetzung nach Anspruch 3, worin der erste Träger und der zweite Träger aktiviertes Aluminiumoxid darstellen.

5. Schichtenförmige Katalysator-Zusammensetzung nach Anspruch 1, worin die erste Schicht außerdem 1 bis 20 Gew.-% berechnet als Platinmetall, der ersten Platin-Komponente, bezogen auf die Gesamtmenge der ersten und zweiten Platin-Komponenten, enthält.

6. Schichtenförmige Katalysator-Zusammensetzung nach Anspruch 5, worin die erste Schicht außerdem mindestens eine erste Sauerstoffspeicher-Zusammensetzung enthält, die eine erste Sauerstoffspeicher-Komponente umfaßt.

7. Schichtenförmige Katalysator-Zusammensetzung nach Anspruch 6, worin die Sauerstoffspeicher-Zusammensetzung in Substanz (Masse) vorliegt.

8. Schichtenförmige Katalysator-Zusammensetzung nach Anspruch 7, worin die erste Sauerstoffspeicher-Komponente und die zweite Sauerstoffspeicher-Komponente gleich oder verschieden sind und ausgewählt werden aus der Gruppe, die besteht aus Cer-, Neodym- und Praseodym-Verbindungen.

9. Schichtenförmige Katalysator-Zusammensetzung nach Anspruch 8, worin die erste Sauerstoffspeicher-Komponente Cerdioxid ist.

10. Schichtenförmige Katalysator-Zusammensetzung nach Anspruch 1, worin die zweite Sauerstoffspeicher-Zusammensetzung ein feuerfestes (schwerschmelzbares) Oxid und eine zweite Sauerstoffspeicher-Komponente umfaßt.

11. Schichtenförmige Katalysator-Zusammensetzung nach Anspruch 10, worin die zweite Sauerstoffspeicher-Zusammensetzung eine Cerdioxid-Sauerstoffspeicher-Komponente und eine Zirkoniumdioxid-feuerfeste Oxid-Zusammensetzung umfaßt.

12. Schichtenförmige Katalysator-Zusammensetzung nach Anspruch 1, worin mindestens eine der ersten oder zweiten Schichten außerdem eine Nickel- oder Eisen-Komponente enthält.

13. Schichtenförmige Katalysator-Zusammensetzung nach Anspruch 12, worin die erste Schicht außerdem eine Nickel- oder Eisen-Komponente enthält.

14. Schichtenförmige Katalysator-Zusammensetzung nach Anspruch 1, worin der erste Stabilisator mindestens eine erste Erdalkalimetall-Komponente der ersten Schicht, abgeleitet von einem Metall, ausgewählt aus der Gruppe, die besteht aus Magnesium, Barium, Calcium und Strontium, ist.

15. Schichtenförmige Katalysator-Zusammensetzung nach Anspruch 14, worin die mindestens eine erste Erdalkalimetall-Komponente abgeleitet ist von einem Metall, ausgewählt aus der Gruppe, die besteht aus Strontium und Barium.

16. Schichtenförmige Katalysator-Zusammensetzung nach Anspruch 15, worin die erste Erdalkalimetall-Komponente Bariumoxid ist.

17. Schichtenförmige Katalysator-Zusammensetzung nach Anspruch 15, worin die zweite Erdalkalimetall-Komponente Strontiumoxid ist.

18. Schichtenförmige Katalysator-Zusammensetzung nach Anspruch 1, worin mindestens eine der genannten ersten Seltenen Erdmetall-Komponente ausgewählt wird aus der Gruppe, die besteht aus Lanthan-Komponenten und Neodym-Komponenten.

19. Schichtenförmige Katalysator-Zusammensetzung nach Anspruch 1, worin die mindestens eine erste Seltene Erdmetall-Komponente von Neodym abgeleitet ist.

20. Schichtenförmige Katalysator-Zusammensetzung nach Anspruch 19, worin die mindestens eine erste Seltene Erdmetall-Komponente von Lanthan abgeleitet ist.

21. Schichtenförmige Katalysator-Zusammensetzung nach Anspruch 1, die in Form eines Pellets mit der ersten Schicht auf der Innenseite und der zweiten Schicht auf der Außenseite des Pellets vorliegt.

22. Schichtenförmige Katalysator-Zusammensetzung nach Anspruch 1, worin die erste Schicht auf ein Substrat als Träger aufgebracht ist und die zweite Schicht auf die erste Schicht, entgegengesetzt zu dem Substrat, als Träger aufgebracht ist.

23. Schichtenförmige Katalysator-Zusammensetzung nach Anspruch 22, worin das Substrat einen wabenförmigen Träger umfaßt.

24. Schichtenförmige Katalysator-Zusammensetzung nach Anspruch 1, worin mindestens eine der ersten und zweiten Schichten außerdem eine teilchenförmige Zusammensetzung aus einer Zirkoniumdioxid-Verbindung und einem Seltenen Erdmetalloxid enthält.

25. Schichtenförmige Katalysator-Zusammensetzung nach Anspruch 24, worin das Seltene Erdmetalloxid Cerdioxid ist und gegebenenfalls außerdem Lanthanoxid, Neodymoxid und Mischungen davon enthält.

26. Schichtenförmige Katalysator-Zusammensetzung nach Anspruch 1, die enthält
etwa 1,068 bis etwa 18,31 g/dm³ (0,0175-0,3 g/in³) Palladium-Komponente;
etwa 0 bis etwa 3,97 g/dm³ (0-0,065 g/in³) einer ersten Platin-Komponente;
etwa 9,15 bis etwa 122 g/dm³ (0,15-2,0 g/in³) des ersten Trägers;
etwa 1,53 bis etwa 30,5 g/dm³ (0,025-0,5 g/in³) der mindestens einen ersten Erdalkalimetall-Komponente;
etwa 1,53 bis etwa 30,5 g/dm³ (0,025-0,5 g/in³) der ersten Zirkonium-Komponente;
etwa 1,53 bis etwa 30,5 g/dm³ (0,025-0,5 g/in³) der mindestens einen ersten Seltenen Erdmetall-Komponente, ausgewählt aus der Gruppe, die besteht aus Cerdioxid-Metallkomponenten, Lanthanmetall-Komponenten und Neodymmetall-Komponenten;
etwa 0,061 bis etwa 1,83 g/dm³ (0,001-0,03 g/in³) einer Rhodium-Komponente;
etwa 0,061 bis etwa 9,15 g/dm³ (0,001-0,15 g/in³) Platin;
etwa 9,15 bis etwa 91,54 g/dm³ (0,15-1,5 g/in³) des zweiten Trägers;
etwa 6,1 bis etwa 122 g/dm³ (0,1-2 g/in³) der zweiten Sauerstoffspeicher-Zusammensetzung;
etwa 1,53 bis etwa 30,5 g/dm³ (0,025-0,5 g/in³) der mindestens einen zweiten Seltenen Erdmetall-Komponente, ausgewählt aus der Gruppe, die besteht aus Lanthanmetall-Komponenten und Neodymmetall-Komponenten; und etwa 1,53 bis etwa 30,5 g/dm³ (0,025-0,5 g/in³) der zweiten Zirkonium-Komponente.

27. Schichtenförmige Katalysator-Zusammensetzung nach Anspruch 26, in der mindestens eine der ersten und zweiten Schichten außerdem etwa 1,53 bis etwa 30,5 g/dm³ (0,025-0,5 g/in³) einer Nickel-Komponente enthält.

28. Schichtenförmige Katalysator-Zusammensetzung nach Anspruch 26, in der mindestens eine der ersten und zweiten Schichten außerdem etwa 6,1 bis etwa 61 g/dm³ (0,1-1,0 g/in³) einer teilchenförmigen Zusammensetzung von Zirkoniumdioxid und Cerdioxid sowie gegebenenfalls außerdem Lanthanoxid, Neodymoxid und Mischungen davon umfaßt.

29. Schichtenförmige Katalysator-Zusammensetzung nach Anspruch 28, in der die teilchenförmige Zusammensetzung aus Zirkoniumdioxid und Cerdioxid 60 bis 90 Gew.-% Zirkoniumdioxid, 10 bis 30 Gew.-% Cerdioxid und 0 bis 10 Gew.-% Seltene Erdmetalloxide, umfassend Lanthanoxid, Neodymoxid, Yttriumoxid und Mischungen davon, umfaßt.

30. Schichtenförmige Katalysator-Zusammensetzung nach Anspruch 1, die außerdem mindestens einen ersten Stabilisator und mindestens eine erste Seltene Erdmetall-Komponente enthält.

31. Verfahren, das die folgenden Stufen umfaßt:
Inkontaktbringen eines Gases, das Stickstoffoxid, Kohlenmonoxid und Kohlenwasserstoft umfaßt, mit einer schichtenförmigen Katalysator-Zusammensetzung, die eine erste innere Schicht und eine zweite äußere Schicht umfaßt, wobei
die erste Schicht umfaßt einen ersten Träger; eine erste Palladium-Komponente; gegebenenfalls eine erste Platin-Komponente; gegebenenfalls mindestens einen ersten Stabilisator; gegebenenfalls mindestens eine erste Seltene Erdmetall-Komponente; und gegebenenfalls eine Zirkonium-Komponente; und
die zweite Schicht umfaßt einen zweiten Träger, ausgewählt aus der Gruppe, die besteht aus Siliciumdioxid-, Aluminiumoxid- und Titandioxid-Verbindungen; Platingruppe-Metall-Komponenten, wobei die Gesamtheit der Platingruppe-Metall-Komponenten in der zweiten Schicht aus einer zweiten Platin-Komponente und einer Rhodium-Komponente besteht; eine zweite Sauerstoffspeicher-Zusammensetzung, die eine verdünnte zweite Sauerstoffspeicher-Komponente umfaßt; und gegebenenfalls eine Zirkonium-Komponente;
wobei die Gesamtmenge der zweiten Platin-Komponente 50 bis 100 Gew.-%, berechnet als Platinmtall, der ersten und zweiten Platin-Komponenten ausmacht.

32. Verfahren, das die Stufen umfaßt:
Mischen einer Lösung mindestens einer wasserlöslichen ersten Palladium-Komponente und gegebenenfalls einer ersten wasserlöslichen Platin-Komponente mit einem feinteiligen feuerfesten (schwerschmelzbaren) Oxid mit einer großen spezifischen Oberfläche, das ausreichend trocken ist, um im wesentlichen die gesamte Lösung zu absorbieren;
Bildung einer ersten Schicht aus der Zusammensetzung;
Umwandeln der ersten Komponenten in der resultierenden ersten Schicht in eine wasserunlösliche Form;
Mischen einer Lösung der Platingruppe-Komponenten, wobei die Gesamtmenge der Platingruppe-Komponenten in der genannten Lösung aus mindestens einer wasserlöslichen zweiten Platin-Komponente und mindestens einer wasserlöslichen Rhodium-Komponente besteht, mit einem feinteiligen feuerfesten (schwerschmelzbaren) Oxid mit großer spezifischer Oberfläche, das ausgewählt wird aus der Gruppe, die besteht aus Siliciumdioxid-, Aluminiumoxid- und Titandioxid-Verbindungen, das ausreichend trocken ist, um im wesentlichen die gesamte Lösung zu absorbieren;
Bildung einer zweiten Schicht aus der Zusammensetzung auf der ersten Schicht;
Umwandeln der zweiten Platin-Komponente und der Rhodium-Komponente in der resultierenden Zusammensetzung in eine wasserunlösliche Form; wobei die Menge der zweiten Platin-Komponente der Zusammensetzung 50 bis 100 Gew.-%, berechnet als Platinmetall, der Gesamtmenge der ersten und zweiten Platin-Komponenten ausmacht.

33. Verfahren nach Anspruch 32, das außerdem eine Stufe der Bildung der ersten Schicht auf einem Substrat umfaßt.

34. Verfahren nach Anspruch 33, das außerdem eine Stufe der Bildung der ersten Schicht auf einem wabenförmigen Substrat umfaßt.

35. Verfahren nach Anspruch 34, worin die Stufe der Umwandlung der ersten Palladium- und Platin-Komponenten das Calcinieren der ersten Stufe umfaßt.

36. Verfahren nach Anspruch 35, worin die Stufe der Umwandlung der zweiten Platin- und Rhodium-Komponenten das Calcinieren der auf einen Träger aufgebrachten zweiten Schicht umfaßt.

37. Verfahren nach Anspruch 32, das außerdem die Stufen umfaßt:
Fixieren der ersten Palladium-Komponente auf dem feuerfesten (schwerschmelzbaren) Oxid; und
Zugabe einer Sauerstoffspeicher-Zusammensetzung, die eine verdünnte Sauerstoffspeicher-Komponente umfaßt, zu der Mischung aus der Lösung mindestens einer wasserlöslichen zweiten Platin-Komponente und mindestens einer wasserlöslichen Rhodium-Komponente und dem feinteiligen feuerfesten (schwerschmelzbaren) Oxid mit großer spezifischer Oberfläche.

38. Verfahren nach Anspruch 32 oder 37, das außerdem die Stufen umfaßt:
Zerkleinern der wasserunlöslichen ersten Palladium- und Platin-Komponenten in einer ersten Aufschlämmung;
Bildung einer ersten Schicht aus der ersten Aufschlämmung und Trocknen der ersten Aufschlämmung; und
Zerkleinern der wasserunlöslichen zweiten Rhodium- und Platin-Komponenten in einer zweiten Aufschlämmung;
Bildung einer zweiten Schicht aus der zweiten Aufschlämmung auf der ersten Schicht und
Trocknen der zweiten Aufschlämmung.

39. Verfahren nach Anspruch 38, worin die erste Aufschlämmung sauer ist.

40. Verfahren nach Anspruch 38, worin die zweite Aufschlämmung sauer ist.

41. Verfahren nach Anspruch 32 oder 37, worin beim Zerkleinern eine Aufschlämmung entsteht, in der die meisten der Feststoffe Teilchengrößen von weniger als etwa 10 µm haben.

42. Verfahren nach Anspruch 40, worin die resultierende Zusammensetzung bei einer Temperatur von mindestens etwa 250°C calciniert wird.

43. Verfahren nach Anspruch 32 oder 37, worin mindestens eine der ersten und zweiten Aufschlämmungen Essigsäure enthält.

44. Verfahren nach Anspruch 32 oder 37, worin die genannte resultierende Zusammensetzung calciniert wird.

## Revendications

1. Catalyseur composite en couches comprenant une première couche interne et une seconde couche externe :
◆ la première couche comprenant :
■ un premier support;
■ un premier composé du palladium ;
■ éventuellement un premier composé du groupe du platine ;
■ éventuellement au moins un premier stabilisant ;
■ éventuellement au moins un premier composé de métal de terres rares ; et
■ éventuellement un composé du zirconium ; et
la seconde couche comprenant :
■ un second support choisi parmi les composés de silice, d'alumine et d'oxyde de titane ;
■ des composés métalliques du groupe du platine, le total des composés métalliques du groupe du platine dans la seconde couche, constitués d'un second composé du platine et d'un composé du rhodium ;
■ une seconde composition de stockage d'oxygène comprenant un second composé de stockage d'oxygène dilué ; et
■ éventuellement un composé du zirconium ; dans laquelle la quantité du second composé de platine comprend de 50 à 100 pour cent en poids, sur la base du platine métal, des premier et second composés de platine.

2. Catalyseur composite en couches selon la revendication 1 dans lequel le premier support est choisi parmi les composés de silice, d'alumine et d'oxyde de titane.

3. Catalyseur composite en couches selon la revendication 1 dans lequel le premier et le second support sont identiques ou -différents et sont des composés activés choisis parmi l'alumine, la silice, la silice-alumine, les aluminosilicates, l'alumine-zircone, l'alumine-oxyde de chrome, et l'alumine-oxyde cérique.

4. Catalyseur composite en couches selon la revendication 3 dans lequel le premier et le second support sont l'alumine activée.

5. Catalyseur composite en couches selon la revendication 1 dans lequel la première couche comprend en outre de 1 à 20 pour cent en poids sur la base du platine métal du premier composé de platine par rapport au total des premier et second composés de platine.

6. Catalyseur composite en couches selon la revendication 5 dans lequel la première couche comprend en outre au moins une première composition de stockage d'oxygène qui comprend un premier composé de stockage d'oxygène.

7. Catalyseur composite en couches selon la revendication 6 dans lequel la composition de stockage d'oxygène est sous une forme massive.

8. Catalyseur composite en couches selon la revendication 7 dans lequel le premier composé de stockage d'oxygène et les seconds composés de stockage d'oxygène sont identiques ou différents et sont choisis parmi les composés de cérium, néodyme et praséodyme.

9. Catalyseur composite en couches selon la revendication 8 dans lequel le premier composé de stockage d'oxygène est l'oxyde cérique.

10. Catalyseur composite en couches selon la revendication 1 dans lequel le second composé de stockage d'oxygène comprend un oxyde réfractaire et un second composé de stockage d'oxygène.

11. Catalyseur composite en couches selon la revendication 10 dans lequel le second composé de stockage d'oxygène comprend un composé de stockage d'oxygène en oxyde cérique et un composite d'oxyde réfractaire de zirconium.

12. Catalyseur composite en couches selon la revendication 1 dans lequel au moins une de la première ou de la seconde couche comprend en outre un composé de nickel ou de fer.

13. Catalyseur composite en couches selon la revendication 12 dans lequel la première couche comprend en outre un composé de nickel ou de fer.

14. Catalyseur composite en couches selon la revendication 1 dans lequel le premier stabilisant est au moins un composé de métal alcalino-terreux de la première couche dérivant d'un métal choisi parmi le magnésium, le baryum, le calcium et le strontium.

15. Catalyseur composite en couches selon la revendication 14 dans lequel au moins un premier composé de métal alcalino-terreux est obtenu à partir d'un métal choisi entre le strontium et le baryum.

16. Catalyseur composite en couches selon la revendication 15 dans lequel le premier composé de métal alcalino-terreux est l'oxyde de baryum.

17. Catalyseur composite en couches selon la revendication 15 dans lequel le second composé de métal alcalino-terreux est l'oxyde de strontium.

18. Catalyseur composite en couches selon la revendication 1 dans lequel au moins un dudit premier composé de métal de terres rares est choisi parmi les composés du lanthane et les composés du néodyme.

19. Catalyseur composite en couches selon la revendication 1 dans lequel au moins un premier composé de terres rares est obtenu à partir du néodyme.

20. Catalyseur composite en couches seton la revendication 19 dans lequel au moins un premier composé de terres rares est obtenu à partir du lanthane.

21. Catalyseur composite en couches selon la revendication 1 dans lequel le composite est sous la forme d'une pastille avec la première couche sur l'intérieur et la seconde couche sur l'extérieur de la pastille.

22. Catalyseur composite en couches selon la revendication 1 dans lequel la première couche est déposée sur un substrat et la seconde couche est déposée sur la première couche à l'opposé du substrat.

23. Catalyseur composite en couches selon la revendication 22 dans lequel le substrat comprend un support à nid d'abeilles.

24. Catalyseur composite en couches selon la revendication 1 dans lequel au moins une de la première et de la deuxième couche comprend en outre un composite particulaire d'un composé de zircone et d'oxyde de terres rares.

25. Catalyseur composite en couches selon la revendication 24 dans lequel l'oxyde de terres rares est l'oxyde cérique et, éventuellement, comprend en outre l'oxyde de lanthane, l'oxyde de néodyme et des mélanges de ceux-ci.

26. Catalyseur composite en couches selon la revendication 1 dans lequel il y a :
◆ entre environ 0,0175 et environ 0,3 g/in³ (1,068 à 18,31 g/dm³) de composé de palladium ;
◆ entre environ 0 et environ 0,065 g/in³ (0 à 3,97 g/dm³) d'un premier composé de platine ;
◆ entre environ 0,15 et environ 2,0 g/in³ (9,15 à 122 g/dm³) du premier support ;
◆ entre environ 0,025 et environ 0,5 g/in³ (1,53 à 30,5 g/dm³) d'au moins un premier composé de métal alcalino-terreux ;
◆ entre environ 0,025 et environ 0,5 g/in³ (1,53 à 30,5 g/dm³) du premier composé de zirconium ; et
◆ entre environ 0,025 et environ 0,5 g/in³ (1,53 à 30,5 g/dm³) d'au moins un premier composé de métal de terres rares choisi parmi les composés métalliques d'oxyde cérique, les composés métalliques de lanthane et un composé métallique de néodyme.
◆ entre environ 0,001 g/in³ (0,061 g/dm³) et environ 0,03 g/in³ (1,83 g/dm³) d'un composé de rhodium ;
◆ entre environ 0,001 g/in³ (0,061 g/dm³) et environ 0,15 g/in³ (9,15 g/dm³) de platine ;
◆ entre environ 0,15 g/in³ (9,15 g/dm³) et environ 1,5 g/in³ (91,54 g/dm³) du second support ;
◆ entre environ 0,1 et 2 g/in³ (6,1 à 122 g/dm³) de la seconde composition de stockage d'oxygène ;
◆ entre environ 0,025 g/in³ et environ 0,5 g/in³ (1,53 à 30,5 g/dm³) d'au moins un second composé de métal de terres rares choisi parmi les composés métalliques du lanthane et les composés métalliques du néodyme ; et
◆ entre environ 0,025 et environ 0,5 g/in³ (1,53 à 30,5 g/dm³) du second composé de zirconium.

27. Catalyseur composite en couches selon la revendication 26 dans lequel au moins une de la première et de la seconde couche comprend entre environ 0,025 g/in³ et environ 0,5 g/in³ (1,53 à 30,5 g/dm³) d'un composé de nickel.

28. Catalyseur composite en couches selon la revendication 26 dans lequel au moins une de la première et de la seconde couche comprend en outre entre environ 0,1 g/in³ et environ 1,0 g/in³ (6,1 à 61 g/dm³) d'un composite particulaire de zircone et d'oxyde cérique et comprend éventuellement en outre de l'oxyde de lanthane, de l'oxyde de néodyme et des mélanges de ceux-ci.

29. Catalyseur composite en couches selon la revendication 28 dans lequel le composite particulaire de zircone et d'oxyde cérique comprend de 60 à 90% en poids de zircone, de 10 à 30% en poids d'oxyde cérique et de 0 à 10% en poids d'oxydes de terres rares comprenant l'oxyde de lanthane, l'oxyde de néodyme, l'oxyde d'yttrium et des mélanges de ceux-ci.

30. Catalyseur composite en couches selon la revendication 1 comprenant en outre :
◆ au moins un premier stabilisant ; et
◆ au moins un premier composé métallique de terres rares.

31. Procédé comprenant les étapes consistant :
à mettre en contact un gaz comprenant de l'oxyde d'azote, du monoxyde de carbone et des hydrocarbures avec un catalyseur composite en couches comprenant une première couche interne et une seconde couche externe :
◆ la première couche comprenant :
■ un premier support ;
■ un premier composé du palladium ;
■ éventuellement un premier composé de platine ;
■ éventuellement au moins un premier stabilisant ;
■ éventuellement au moins un premier composé de métal de terres rares ; et
■ éventuellement un composé du zirconium ; et
◆ la seconde couche comprenant :
■ un second support choisi parmi les composés de silice, d'alumine et d'oxyde de titane ;
■ des composés métalliques du groupe du platine, le total des composés métalliques du groupe du platine dans la seconde couche, constitués d'un second composé du platine et d'un composé du rhodium ;
■ une seconde composition de stockage d'oxygène comprenant un second composé de stockage d'oxygène dilué ; et
■ éventuellement un composé du zirconium ; dans laquelle la quantité du second composé de platine du composite comprend de 50 à 100 pour cent en poids, sur la base du platine métal, des premier et second composés de platine.

32. Procédé comprenant les étapes consistant :
◆ à mélanger une solution d'au moins un premier composé de palladium hydrosoluble et éventuellement d'un premier composé de platine hydrosoluble, et un oxyde réfractaire finement divisé, d'aire de surface élevée qui est suffisamment sec pour adsorber pratiquement toute la solution ;
◆ à préparer une première couche du composite ;
◆ à convertir les premiers composés dans la première couche résultante sous une forme insoluble à l'eau ;
◆ à mélanger une solution de composés du groupe du platine, le total des composés du groupe du platine dans ladite solution, constituée d'au moins un second composé hydrosoluble du groupe du platine et d'au moins un composé hydrosoluble du rhodium et un oxyde réfractaire finement divisé, d'aire de surface élevée choisi parmi les composés de silice, d'alumine et d'oxyde de titane qui est suffisamment sec pour adsorber pratiquement toute la solution ;
◆ à préparer une seconde couche de composite sur la première couche ;
◆ à convertir le second composé de platine et le composé de rhodium pour obtenir le composite résultant sous une forme insoluble à l'eau ;
◆ la quantité du second composé de platine du composite comprenant entre 50 et 100 pour cent en poids, sur la base du platine métal, du total du premier et du second composés de platine.

33. Procédé selon la revendication 32 comprenant en outre les étapes de dépôt de la première couche sur un substrat.

34. Procédé selon la revendication 33 comprenant en outre les étapes de dépôt de la première couche sur un substrat de type nid d'abeilles.

35. Procédé selon la revendication 34 dans lequel l'étape consistant à transformer les premiers composés de palladium et de platine comprend la calcination de la première couche.

36. Procédé selon la revendication 35 dans lequel l'étape consistant à transformer les seconds composés de platine et de rhodium comprend la calcination de la seconde couche déposée sur un support.

37. Procédé selon la revendication 32 comprenant en outre les étapes consistant :
◆ à fixer le premier composé de palladium sur l'oxyde réfractaire ; et
◆ à ajouter une composition de stockage d'oxygène comprenant un composé de stockage d'oxygène dilué au mélange de la solution d'au moins un second composé de platine hydrosoluble et d'au moins un composé de rhodium hydrosoluble, et l'oxyde réfractaire finement divisé, d'aire de surface élevée.

38. Procédé selon la revendication 32 ou 37 comprenant en outre les étapes consistant :
◆ à broyer les premiers composés de palladium et de platine insolubles à l'eau dans une première suspension ;
◆ à déposer une première couche de la première suspension, et à sécher la première suspension ; et
◆ à broyer les second composés de rhodium et de platine insolubles à l'eau dans une seconde suspension ;
◆ à déposer une seconde couche de la seconde suspension sur la première couche, et
◆ à sécher la seconde suspension.

39. Procédé selon la revendication 38 dans lequel la première suspension est acide.

40. Procédé selon la revendication 38 dans lequel la seconde suspension est acide.

41. Procédé selon la revendication 32 ou 37 dans lequel ledit broyage fournit une suspension dans laquelle la plus grande partie des matières solides a des tailles de particules inférieures à environ 10 micromètres.

42. Procédé selon la revendication 40 dans lequel ledit composite résultant est calciné à une température d'au moins environ 250°C.

43. Procédé selon la revendication 32 ou 37 dans lequel au moins une de ladite première et seconde suspension contient de l'acide acétique.

44. Procédé selon la revendication 32 ou 37 dans lequel ledit composite résultant est calciné.
